# EUROPÄISCHE PATENTSCHRIFT

(11) **EP 3 453 002 B1**
(45) Veröffentlichungstag und Bekanntmachung des Hinweises auf die Patenterteilung: **06.05.2020**
(21) Anmeldenummer: 17709634.4
(22) Anmeldetag: 06.03.2017
(51) Int. Cl.: G08B 25/01, B60R 21/0132, G08G 1/00, G08B 25/08

(54) **VERFAHREN UND VORRICHTUNG ZUR BESTIMMUNG VON UNFALLEINWIRKUNGEN AUF EIN FAHRZEUG**
METHOD AND DEVICE FOR DETERMINING ACCIDENT EFFECTS ON A VEHICLE
PROCÉDÉ ET DISPOSITIF POUR DÉTERMINER LES EFFETS D'UN ACCIDENT SUR UN VÉHICULE

(30) Priorität: 06.05.2016 DE 102016207828
(43) Veröffentlichungstag der Anmeldung: 13.03.2019
(73) Patentinhaber: Robert Bosch GmbH, 70442 Stuttgart (DE)
(72) Erfinder: ZWISSLER, Fabian, 71384 Weinstadt (DE); HERMANN, Erich, 70806 Kornwestheim (DE); GOEBEL, Sven, 71254 Ditzingen (DE)
(86) Internationale Anmeldenummer: PCT/EP2017/055145
(87) Internationale Veröffentlichungsnummer: WO 2017/190867

(56) Entgegenhaltungen:
- DE-A1- 10 002 536
- DE-A1- 19 700 353
- DE-A1-102014 107 919
- US-A- 5 504 482

## Beschreibung

Die Erfindung betrifft ein Verfahren und eine Vorrichtung zum Bestimmen von Unfalleinwirkungen auf ein Fahrzeug.

### Stand der Technik

Die Auswertung von Unfällen im Straßenverkehr erfolgt in der Regel auf Basis von Zeugenaussagen, der an den beteiligten Fahrzeugen festgestellten Schäden und von der Polizei aufgenommener Spuren, z.B. Brems- und Lackspuren.

Zeugenaussagen sind unzuverlässig und Schäden und Spuren ermöglichen nicht immer eine eindeutige Rekonstruktion des Unfallhergangs.

Aus dem Dokument DE 10 2014 107 919 ist ein Unfallmeldesystem (RS) für ein Fahrzeug mit einer Unfallerfassungssektion (50) zum Erfassen eines Unfalls; einer Informationssammelsektion (10) zum Sammeln von Informationen und einer Informationsmeldesektion (30) zum Melden der gesammelten Informationen zu einer externen Stelle (40) bekannt.

Es ist wünschenswert, die Auswertung von Unfällen im Straßenverkehr zu verbessern.

### Offenbarung der Erfindung

Ein Verfahren zum Bestimmen von Unfalleinwirkungen auf ein Fahrzeug, insbesondere auf ein Kraftfahrzeug, wird im Verfahrensanspruch 1 beansprucht, und umfasst gemäß einem Ausführungsbeispiel der Erfindung: wiederholtes/kontinuierliches Bestimmen/Messen und Speichern von Bewegungsdaten des Fahrzeugs; Auswerten der Bewegungsdaten, um ein Unfallereignis zu erkennen, und nach dem Erkennen eines Unfallereignisses aus den gespeicherten Bewegungsdaten wenigstens einen Aufprallwinkel zu berechnen.

Eine Vorrichtung zum Bestimmen von Unfalleinwirkungen auf ein Fahrzeug, insbesondere ein Kraftfahrzeug, wird in Vorrichtungsanspruch 7 beansprucht.

Auf Grundlage der von dem wenigstens einen Bewegungssensor erfassten Bewegungsdaten kann die Rekonstruktion und Auswertung des Unfallhergangs vereinfacht, beschleunigt und objektiviert werden.

In einer Ausführungsform umfassen die Bewegungsdaten Geschwindigkeits- und/oder Beschleunigungsdaten des Fahrzeugs, insbesondere Geschwindigkeits- und/oder Beschleunigungsdaten in wenigstens zwei Dimensionen. Auf diese Weise kann die Bewegung des Fahrzeugs entlang einer Ebene (auf der Straße) gut rekonstruiert werden. Insbesondere kann auf ein Unfallereignis geschlossen werden, wenn der Betrag der Beschleunigungsdaten einen vorgegebenen Grenzwert überschreitet. Aus Geschwindigkeits- und/oder Beschleunigungsdaten in wenigstens zwei Dimensionen kann ein Aufprallwinkel des Fahrzeugs oder auf das Fahrzeug mit hoher Genauigkeit bestimmt werden.

In einer Ausführungsform umfasst das Verfahren, die gemessenen Bewegungsdaten für 5 min bis 30 min, insbesondere für 10 min bis 15 min zu speichern. Auf diese Weise werden ausreichend Daten für eine Rekonstruktion des Unfallhergangs zu Verfügung gestellt. Gleichzeitig werden die Belange des Datenschutzes berücksichtigt, da nicht unnötig viele Daten über das Fahrzeug bzw. dessen Fahrer gespeichert werden. Zur temporären Speicherung der Daten im Kraftfahrzeug kann insbesondere ein lokaler Ringspeicher verwendet werden.

In einer Ausführungsform umfasst das Verfahren, nach dem Erkennen eines Unfallereignisses einen Notruf abzusetzen, um eine schnelle und zielgerichtete Einleitung von Rettungsmaßnahmen zu ermöglichen. Dazu kann das Fahrzeug mit einer geeigneten Sendevorrichtung ausgestattet sein. Das Fahrzeug kann darüber hinaus mit einem Positionsdatenempfänger, insbesondere einem GPS-Empfänger, ausgestattet sein. Dies ermöglicht es, zusammen mit dem Notruf die aktuellen Positionsdaten des Fahrzeugs zu übertragen, so dass Rettungskräfte gezielt und mit hoher Genauigkeit zu dem Fahrzeug bzw. zu der Unfallstelle geführt werden können.

In einer Ausführungsform umfasst das Verfahren, die Bewegungsdaten nach dem Erkennen eines Unfallereignisses an einen Server zu übertragen. Auf diese Weise können die Bewegungsdaten gesichert und auf dem Server ausgewertet werden. Sind auch andere Unfallbeteiligte mit einer Vorrichtung ausgestattet, die Bewegungsdaten des jeweiligen Fahrzeugs erfasst, können die Daten dieser Unfallbeteiligten zusammengeführt, miteinander verglichen und gemeinsam ausgewertet werden. Die Qualität der Unfallrekonstruktion kann auf diese Weise noch weiter verbessert werden.

### Figurenbeschreibung:

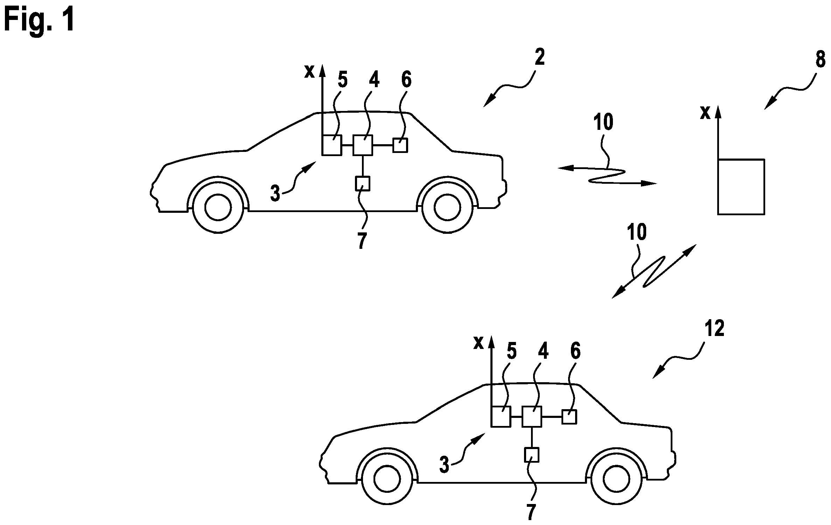

Figur 1 zeigt beispielhaft zwei Kraftfahrzeuge 2, 12, die jeweils mit einer Vorrichtung 3 zum Bestimmen einer Unfalleinwirkung auf das jeweilige Kraftfahrzeug 2, 12 ausgebildet sind.

Die Vorrichtung 3 umfasst insbesondere wenigstens einen Beschleunigungs- und / oder Geschwindigkeitssensor 6, der ausgebildet ist, die Beschleunigung bzw. die Geschwindigkeit des Kraftfahrzeugs 2, 4 in wenigstens zwei Dimensionen, z.B. vorne und hinten sowie links und rechts, zu erfassen. Es kann auch für jede Dimension ein eigener Beschleunigungs- und / oder Geschwindigkeitssensor 6 vorgesehen sein.

Die von dem Bewegungssensoren 6 erfassten Daten werden einer Auswertevorrichtung 4 zugeführt, die ausgebildet ist, die von dem Bewegungssensoren erfassten Daten auszuwerten, insbesondere um ein Unfallereignis zu erkennen.

Ein Unfallereignis kann insbesondere dadurch erkannt werden, das der Absolutwert der Beschleunigung des jeweiligen Kraftfahrzeugs 2, 12 einen vorgegebenen Grenzwert übersteigt. Ein abruptes Abbremsen des Fahrzeugs 2, 12, z.B. beim Anstoßen an ein Hindernis, hat große negative Beschleunigungswerte zur Folge; ein Anstoßen des Fahrzeugs 2, 12 durch ein anderes Fahrzeug 12, 2, z.B. bei einem Auffahrunfall, hat große positive Beschleunigungswerte zur Folge.

Wenn ein Unfallereignis erkannt worden ist, kann die Vorrichtung 3 über eine geeignete Sendevorrichtung 5 einen Notruf absetzen, um Rettungskräfte schnell zum Unfallort zu führen. Dazu können die von der Sendevorrichtung 5 ausgesendeten Daten insbesondere aktuelle Positionsdaten, insbesondere GPS-Daten, des Kraftfahrzeugs 2, 12 enthalten.

Die von den Bewegungssensoren 6 erfassten Daten werden darüber hinaus wenigstens zeitweise in einer in dem Kraftfahrzeug 2 vorgesehenen Speichervorrichtung 7 gespeichert. Eine Speicherung der Daten ermöglicht es, die Bewegung des Kraftfahrzeugs 2, 12 vor und/oder nach dem Unfallereignis zu rekonstruieren.

Aus den erfassten Geschwindigkeits- und/oder Beschleunigungsdaten kann insbesondere ein Aufprallwinkel α des Kraftfahrzeugs 2, 12 berechnet werden. Auch Folgekollisionen, die eventuell nach dem ersten Unfallereignis auftreten, können erfasst und ausgewertet werden.

Auf diese Weise kann ein Unfallereignis unabhängig von Zeugenaussagen und sonstigen Spuren sicher, schnell und zuverlässig rekonstruiert und ausgewertet werden.

Nachdem eine Unfallereignis festgestellt worden ist, können die erfassten Bewegungsdaten der beteiligten Kraftfahrtzeuge 2, 12 insbesondere über eine geeignete Datenverbindung 10, beispielsweise ein Mobilfunknetz und/oder das Internet, an einen zentralen Server 8 übertragen werden, und dort gespeichert, gesichert und ausgewertet zu werden.

Insbesondere können, wenn mehrere der an dem Unfallereignis beteiligten Kraftfahrzeuge 2, 12 mit einer Vorrichtung zum Erfassen und Speicher von Bewegungsdaten ausgestattet sind, die Bewegungsdaten aller dieser Kraftfahrzeuge 2, 12 zusammengeführt, abgeglichen und gemeinsam ausgewertet werden. Auf diese Weise kann die Qualität und die Zuverlässigkeit der Auswertung noch weiter verbessert werden.

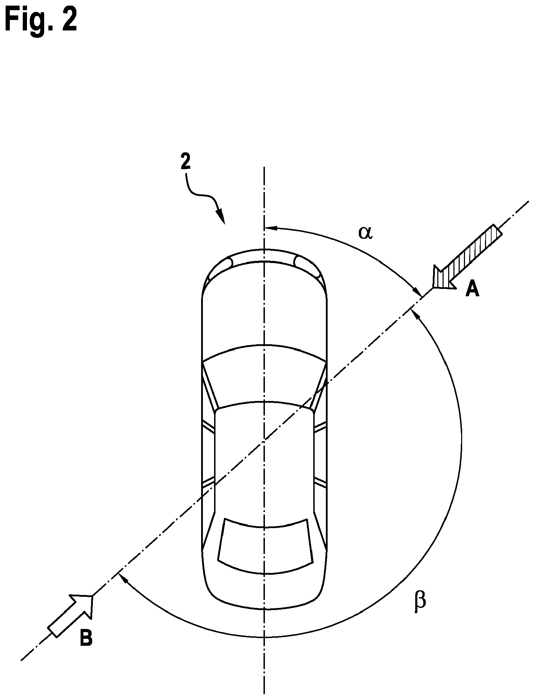

Figur 2 zeigte eine schematische Darstellung eines Unfalls. Dabei symbolisieren die Pfeile die Auswirkungen auf das Kraftfahrzeug 2.

Der Pfeil A symbolisiert die erste Kollision bzw. den ersten Anstoß, wobei das Kraftfahrzeug 2 von vorne rechts getroffen wird. Aus den Beschleunigungswerten, die durch diesen Anstoß erzeugt werden, können die Richtung und die Intensität des Anstoßes / der Kollision bestimmt werden.

Der Pfeil B symbolisierte eine zweite Kollision (Folgekollision), die sich beispielsweise daraus ergibt, dass das Kraftfahrzeug 2 durch die erste Kollision (Pfeil A) gegen ein Hindernis geschoben wird und an diesem Hindernis anschlägt.

Der Anschlag an dem Hindernis hat eine zweite, in der Regel schwächere Kollision zur Folge. Dabei ist die Richtung der zweiten Kollision häufig der Richtung der ersten Kollision im Wesentlichen entgegengesetzt, d.h. die beiden Pfeile A und B sind in Bezug zueinander in einem Winkel β von ca. 180° ausgerichtet.

Wird das Kraftfahrzeug 2 zwischen der ersten und der zweiten Kollision abgelenkt oder gedreht, können der erste und der zweite Pfeil A, B, d.h. die erste und die zweite Kollision, auch in einen anderen Winkel β zueinander ausgerichtet sein.

Die zweite Kollision kann ihre Ursache auch darin haben, dass nach der ersten Kollision, z.B. einem Auffahrunfall, ein weiteres Kraftfahrzeug 12 auf das verunfallte Kraftfahrzeug 2 auffährt.

## Patentansprüche

1. Verfahren zum Bestimmen von Unfalleinwirkungen auf ein Fahrzeug (2, 12), insbesondere ein Kraftfahrzeug, wobei das Verfahren umfasst:
wiederholtes Bestimmen und Speichern von Bewegungsdaten des Fahrzeugs (2, 12);
Auswerten der Bewegungsdaten, um ein Unfallereignis zu erkennen;
, nach dem Erkennen eines Unfallereignisses, berechnen wenigstens eines Aufprallwinkels (α) aus den gespeicherten Bewegungsdaten.

2. Verfahren nach Anspruch 1, wobei das Verfahren umfasst, aus den gespeicherten Bewegungsdaten den Bewegungsablauf des Fahrzeugs (2, 12) vor und/oder unmittelbar nach dem Unfallereignis zu rekonstruieren.

3. Verfahren nach Anspruch 1 oder 2, wobei die Bewegungsdaten Geschwindigkeits- und/oder Beschleunigungsdaten, insbesondere in wenigstens zwei Dimensionen, umfassen.

4. Verfahren nach einem der vorangehenden Ansprüche, wobei das Verfahren umfasst, die gemessenen Bewegungsdaten für 5 min bis 30 min, insbesondere für 10 min bis 15 min zu speichern.

5. Verfahren nach einem der vorangehenden Ansprüche, wobei das Verfahren umfasst, nach dem Erkennen eines Unfallereignisses einen Notruf abzusetzen.

6. Verfahren nach einem der vorangehenden Ansprüche, wobei das Verfahren umfasst, die Bewegungsdaten nach dem Erkennen eines Unfallereignisses an einen Server (8) zu übertragen.

7. Vorrichtung zum Bestimmen von Unfalleinwirkungen auf ein Fahrzeug (2, 12), insbesondere ein Kraftfahrzeug, wobei die Vorrichtung umfasst:
wenigstens einen Bewegungssensor (6), der ausgebildet ist, Bewegungsdaten des Fahrzeugs (2, 12) zu erfassen;
wenigstens eine Speichervorrichtung (7), die ausgebildet ist, die von dem wenigstens einen Bewegungssensor (6) erfassten Bewegungsdaten zu speichern, und
eine Auswertevorrichtung (4), die ausgebildet ist, die von dem wenigstens einen Bewegungssensor (6) erfassten Bewegungsdaten auszuwerten, um ein Unfallereignis zu erkennen, wobei die Vorrichtung dazu ausgebildet ist nach dem Erkennen eines Unfallereignisses, wenigstens einen Aufprallwinkel (α) aus den gespeicherten Bewegungsdaten zu berechnen.

8. Vorrichtung nach Anspruch 7, wobei der wenigstens eine Bewegungssensor (6) wenigstens einen Geschwindigkeitssensor und/oder wenigstens einen Beschleunigungssensor umfasst.

9. Vorrichtung nach Anspruch 7 oder 8, wobei die wenigstens eine Speichervorrichtung (7) wenigstens eine Ringspeichervorrichtung umfasst, die zum temporären Speichern der von dem wenigstens einen Bewegungssensor (6) erfassten Bewegungsdaten ausgebildet ist.

10. Vorrichtung nach Anspruch 7 bis 9, wobei die Vorrichtung eine Sendevorrichtung (5) umfasst, die ausgebildet ist, nach dem Erkennen eines Unfallereignisses einen Notruf abzusetzen und/oder die von dem wenigstens einen Bewegungssensor (6) erfassten Bewegungsdaten an einen Server (8) zu übertragen.

## Claims

1. Method for determining effects of an accident on a vehicle (2, 12), in particular a motor vehicle, wherein the method comprises:
repeatedly determining and storing movement data of the vehicle (2, 12);
evaluating the movement data to identify an accident event;
calculating at least one impact angle (α) from the stored movement data after an accident event has been identified.

2. Method according to Claim 1, wherein the method comprises reconstructing the movement profile of the vehicle (2, 12) from the stored movement data before and/or immediately after the accident event.

3. Method according to Claim 1 or 2, wherein the movement data comprise speed and/or acceleration data, in particular in at least two dimensions.

4. Method according to one of the preceding claims, wherein the method comprises storing the measured movement data for 5 min to 30 min, in particular for 10 min to 15 min.

5. Method according to one of the preceding claims, wherein the method comprises sending an emergency call after an accident event has been identified.

6. Method according to one of the preceding claims, wherein the method comprises transmitting the movement data to a server (8) after an accident event has been identified.

7. Apparatus for determining effects of an accident on a vehicle (2, 12), in particular a motor vehicle, wherein the apparatus comprises:
at least one movement sensor (6), which is designed to detect movement data of the vehicle (2, 12);
at least one storage apparatus (7), which is designed to store the movement data detected by the at least one movement sensor (6), and
an evaluation apparatus (4), which is designed to evaluate the movement data detected by the at least one movement sensor (6) to identify an accident event, wherein the apparatus is designed to calculate at least one impact angle (α) from the stored movement data after an accident event has been identified.

8. Apparatus according to Claim 7, wherein the at least one movement sensor (6) comprises at least one speed sensor and/or at least one acceleration sensor.

9. Apparatus according to Claim 7 or 8, wherein the at least one storage apparatus (7) comprises at least one ring buffer apparatus, which is designed to temporarily store the movement data detected by the at least one movement sensor (6).

10. Apparatus according to Claim 7 to 9, wherein the apparatus comprises a transmission apparatus (5), which is designed to send an emergency call after an accident event has been identified and/or to transmit the movement data detected by the at least one movement sensor (6) to a server (8).

## Revendications

1. Procédé de détermination des effets d'un accident sur un véhicule (2, 12), notamment un véhicule automobile, le procédé comprenant :
la détermination et mémorisation répétitives de données de mouvement du véhicule (2, 12) ;
l'interprétation des données de mouvement afin de reconnaître un événement d'accident ;
après la reconnaissance d'un événement d'accident, le calcul d'au moins un angle de collision (α) à partir des données de mouvement mémorisées.

2. Procédé selon la revendication 1, le procédé comprenant la reconstruction du déroulement du mouvement du véhicule (2, 12) avant et/ou immédiatement après l'événement d'accident à partir des données de mouvement mémorisées.

3. Procédé selon la revendication 1 ou 2, les données de mouvement comprenant des données de vitesse et/ou d'accélération, notamment dans au moins deux dimensions.

4. Procédé selon l'une des revendications précédentes, le procédé comprenant la mémorisation des données de mouvement mesurées pendant 5 min à 30 min, notamment pendant 10 min à 15 min.

5. Procédé selon l'une des revendications précédentes, le procédé comprenant l'envoi d'un appel de secours après la reconnaissance d'un événement d'accident.

6. Procédé selon l'une des revendications précédentes, le procédé comprenant la transmission des données de mouvement à un serveur (8) après la reconnaissance d'un événement d'accident.

7. Dispositif de détermination des effets d'un accident sur un véhicule (2, 12), notamment un véhicule automobile, le dispositif comprenant :
au moins un capteur de mouvement (6) qui est configuré pour acquérir des données de mouvement du véhicule (2, 12) ;
au moins un dispositif de mémorisation (7) qui est configuré pour mémoriser les données de mouvement acquises par l'au moins un capteur de mouvement (6), et
un dispositif d'interprétation (4) qui est configuré pour interpréter les données de mouvement acquises par l'au moins un capteur de mouvement (6) afin de reconnaître un événement d'accident, le dispositif étant configuré pour, après la reconnaissance d'un événement d'accident, calculer au moins un angle de collision (α) à partir des données de mouvement mémorisées.

8. Dispositif selon la revendication 7, l'au moins un capteur de mouvement (6) comprenant au moins un capteur de vitesse et/ou au moins un capteur d'accélération.

9. Dispositif selon la revendication 7 ou 8, l'au moins un dispositif de mémorisation (7) comprenant au moins un dispositif à mémoire circulaire qui est configuré pour mémoriser temporairement les données de mouvement acquises par l'au moins un capteur de mouvement (6) .

10. Dispositif selon les revendications 7 à 9, le dispositif comprenant un dispositif d'émission (5) qui est configuré pour, après la reconnaissance d'un événement d'accident, envoyer un appel de secours et/ou pour transmettre à un serveur (8) les données de mouvement acquises par l'au moins un capteur de mouvement (6) .
